(19) Europäisches Patentamt / European Patent Office / Office européen des brevets

(11) **EP 2 657 909 B1**

(12) **EUROPEAN PATENT SPECIFICATION**

(45) Date of publication and mention
of the grant of the patent:
**13.06.2018 Bulletin 2018/24**

(51) Int Cl.:
***G06T 7/55*** (2017.01)

(21) Application number: **12165311.7**

(22) Date of filing: **24.04.2012**

(54) **Method and image processing device for determining disparity**

Verfahren und Bildverarbeitungsvorrichtung zur Bestimmung von Disparität

Procédé et dispositif de traitement d'images pour traiter les disparités

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2013 Bulletin 2013/44**

(73) Proprietor: **Vestel Elektronik Sanayi ve Ticaret A.S.
45030 Manisa (TR)**

(72) Inventor: **Cigla, Cevahir
45030 Manisa (TR)**

(74) Representative: **Cayli, Hülya
Paragon Consultancy Inc.
Koza Sokak No: 63/2
GOP
06540 Ankara (TR)**

(56) References cited:
**US-A1- 2011 110 583     US-A1- 2011 158 528**

- **SANG-BEOM LEE ET AL: "View-consistent
multi-view depth estimation for
three-dimensional video generation",
3DTV-CONFERENCE: THE TRUE VISION -
CAPTURE, TRANSMISSION AND DISPLAY OF 3D
VIDEO (3DTV-CON), 2010, IEEE, PISCATAWAY,
NJ, USA, 7 June 2010 (2010-06-07), pages 1-4,
XP031706348, ISBN: 978-1-4244-6377-0**
- **CIGLA C ET AL: "Edge-aware stereo matching
with O(1) complexity", PROCEEDINGS OF THE
SPIE - THE INTERNATIONAL SOCIETY FOR
OPTICAL ENGINEERING SPIE - THE
INTERNATIONAL SOCIETY FOR OPTICAL
ENGINEERING USA, vol. 8290, 30 March 2012
(2012-03-30), XP002679564, ISSN: 0277-786X**

## Description

### Technical Field

Various embodiments relate generally to image processing. Furthermore, various embodiments relate to a method and an image processing device for determining disparity.

### Background

With the development and success of three-dimensional (3D) technologies, its application is not limited to 3D movies in theatres, but is extending to home electronics, such as 3D TVs and other 3D consumer products. 3D vision or stereoscopic vision may be created by presenting two slightly different sets of images to a viewer, wherein one set includes left eye images corresponding to a left eye viewpoint and the other set includes right eye images corresponding to a right eye viewpoint. 3D displays (e.g., CRT, LCD, Plasma, etc.) show left eye and right eye views on the same surface, and by temporal or spatial multiplexing, make the left eye of a viewer only see the left eye view and the right eye only see the right-eye view. Disparities between the two views provide a vision with depth perception to the viewer, and make the viewer perceive a stereoscopic view.

Disparity map estimation which provides information about the 3D position of objects or pixels in the stereo (multi-view) content becomes essential in stereo (multi-view) image processing. In literature, there are various methods providing disparity maps from 3D content involving stereo or multi-view video. Computational complexity is one of the fundamental constraints that restrict the utilization of several optimization techniques enabling high quality estimates, and accordingly local methods have been popular in recent years which do not require time consuming global optimization methods. Among many alternatives, dynamic programming based approaches provide a fast solution and can also be implemented in hardware.

L. Wang et al. (High-quality real-time stereo using adaptive cost aggregation and dynamic programming, International Symposium on 3D Data Processing Visualization and Transmission, 2006) discloses a method exploiting scan-line optimization, in which each row is processed independently and the global energy is minimized. For each disparity candidate, all pixels in the left view are shifted to the right view (or vice-versa), and pixel-wise cost function is calculated by sum of absolute difference of Red, Green and Blue intensity values. These cost values are horizontally aggregated with additional smoothness constraints and ordering constraints. The smoothness rule makes pixels have similar disparity assignments as long as their cost functions have similar characteristics. The ordering rule forces the consecutive disparity assignments to be non-decreasing with a penalty function so that occlusion is set to a minimum level. The article "Edge-aware stereo matching with O(1) complexity" by Cevahir Qigla and A. Aydin Alatan in Proc. SPIE 8290 on 09. February 2012, discloses a local stereo matching algorithm which provides precise disparity maps with low computational complexity. The time consuming intensity dependent aggregation procedure is improved by permeability filtering, engaging computationally efficient two pass integration approach by weighted and connected support regions.

### Summary

Various embodiments determine or estimate a disparity map for stereo image or video at a higher precision and lower computational complexity than the conventional approaches.

Various embodiments provide a method for determining a disparity as defined in appended claim 1.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:

Fig. 1 shows a schematic diagram of an image processing device according to an embodiment.
Fig. 2 shows a flow diagram according to various embodiments.
Fig. 3 shows a flow diagram according to various embodiments.
Fig. 4 shows permeability weights determined for an image element according to an embodiment.
Fig. 5 illustrates the aggregation of amended cost values according to an embodiment.
Fig. 6 illustrates permeability weight distribution according to an embodiment.
Fig. 7 shows a reliability mapping function according to an embodiment.

Fig. 8 shows a histogram of a disparity map according to an embodiment.
Fig. 9 shows an imaging system according to an embodiment.

## Detailed Description

Various embodiments provide a method for determining disparity values, taking information of preceding pixels in the same image and information of pixels in the preceding image into consideration. Embodiments provide more accurate disparity estimation at low computational complexity.

Various embodiments are directed to a method for determining a disparity value for an image element in a row of a first image with respect to a second image. The method may include determining, for each disparity candidate of a plurality of disparity candidates, a cost value based on an intensity difference between the image element in the first image and a corresponding image element in the second image determined using the respective disparity candidate; determining, for each disparity candidate of the plurality of disparity candidates, an amended cost value based on the cost value of the image element and at least one of a first term and a second term, said first term being based on disparity values of one or more image elements from one or more preceding rows in the first image, and said second term being based on a disparity value of a corresponding image element in a preceding first image having the same position as the image element in the first image; and determining a disparity candidate out of the plurality of disparity candidates as the disparity value of the image element in the first image based on the amended cost values of the plurality of disparity candidates.

The first image may be a left eye view image, e.g. captured by a camera at the left eye position. The second image may be a right eye view image, e.g. captured by a camera at the right eye position. The first image and the second image may form a stereo image pair.

In one embodiment, the image element described in the context of this description may include a picture element, also referred to as a pixel. In another embodiment, the image element described in the context of this description may include a plurality of picture elements, such as a block of picture elements or any object including a plurality of picture elements. The cost value, the amended cost value, the disparity value, the first term and the second term may be determined for each pixel or each block of pixels accordingly.

According to an embodiment, the method may further include for each disparity candidate of the image element, determining the first term based on first disparity differences between the disparity candidate and the disparity values of the one or more image elements from the one or more preceding rows in the first image.

In an embodiment, a first weighting factor corresponding to each of the one or more image elements from the one or more preceding rows is determined based on the intensity value of the respective one or more image elements. A sum of the first disparity differences weighted by the respective first weighting factor may be determined as the first term.

In another embodiment, the method may further include for each disparity candidate of the image element, determining the second term based on a second disparity difference between the disparity candidate and the disparity value of the corresponding image element in the preceding first image.

In an embodiment, a second weighting factor corresponding to the corresponding image element in the preceding first image is determined based on the intensity value of the corresponding image element. The second disparity difference weighted by the second weighting factor may be determined as the second term.

According to a further embodiment, the method may further include, for each disparity candidate of the image element, determining an aggregated cost value by aggregating amended cost values determined for all image elements in the same row as said image element in the first image. The disparity candidate having the minimum aggregated cost value may be determined as the disparity value of the image element in the first image.

In an embodiment, a weighted sum of the amended cost values determined for all image elements in the same row is determined as the aggregated cost value for the image element in the first image, wherein each amended cost value is weighted based on the intensity value of the respective image element which said amended cost value corresponds to.

In a further embodiment, the method may include determining whether the disparity value of the image element in the first image is reliable based on a predetermined threshold and a disparity value of the corresponding image element in the second image, wherein the corresponding image element is determined using the disparity value of the image element in the first image.

In an embodiment, an amended disparity value is determined for the image element in the first image, based on disparity values of all image elements in the same row as said image element, reliability of said all image elements, and intensity values of said all image elements. In a further embodiment, a disparity histogram of the preceding first image is determined which includes, for each disparity value of a plurality of disparity values determined for image elements of the preceding first image, a frequency value indicating the number of image elements having the respective disparity value. A maximum disparity value and a minimum disparity value may be determined based on the disparity histogram, wherein the maximum disparity value and the minimum disparity value define a range of disparity values having frequency values higher than a predetermined threshold. If the amended disparity value is smaller than the minimum disparity value, the amended disparity value of the image element in the first image may be determined to be the minimum disparity value. If the amended disparity value is larger than the maximum disparity value, the amended disparity value of the image element in the first image may be determined to be the maximum disparity value.

In a further embodiment, a final disparity value of the image element in the first image may be determined based on the amended disparity value of said image element, the disparity value and intensity value of the corresponding image element in the preceding first image having the same position as said image element in the first image.

The first image and the second image may be grayscale images in an embodiment. In another embodiment, the first image and the second image may be colour images. The above embodiment described in relation to the intensity value is analogously valid for the RGB (red, green, blue) values of colour images. Similarly, the colour images may be represented using other colour models, such as CMYK (cyan, magenta, yellow and key) and the various embodiments may be applied accordingly.

Another embodiment is directed to an image processing device for determining a disparity value for an image element in a row of a first image with respect to a second image. The image processing device may include a cost value determination circuit configured to determine, for each disparity candidate of a plurality of disparity candidates, a cost value based on an intensity difference between the image element in the first image and a corresponding image element in the second image determined using the respective disparity candidate. The image processing device may include an amended cost value determination circuit configured to determine, for each disparity candidate of the plurality of disparity candidates, an amended cost value based on the cost value of the image element and at least one of a first term and a second term. The first term is based on disparity values of one or more image elements from one or more preceding rows in the first image, and the second term is based on a disparity value of a corresponding image element in a preceding first image having the same position as the image element in the first image. The image processing device may further include a disparity determination circuit configured to determine a disparity candidate out of the plurality of disparity candidates as the disparity value of the image element in the first image, based on the amended cost values of the plurality of disparity candidates.

Embodiments described above in the context of the method for determining a disparity value for an image element are analogously valid for the image processing device, and vice versa. The various circuits, such as the cost value determination circuit, the amended cost value determination circuit, and the disparity determination circuit may each be configured to carry out the functions described in the method of various embodiments above.

In an embodiment, the various "circuit" comprised in the image processing device may be understood as any kind of a logic implementing entity, which may be special purpose circuitry or a processor executing software stored in a memory, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Any other kind of implementation of the respective functions described in the embodiments in this description may also be understood as a "circuit" in accordance with an alternative embodiment.

In an embodiment, the image processing device may be a circuit described above configured to perform the method for determining the disparity value for the image element of the first image with respect to the second image.

In another embodiment, a computer readable medium having a program stored thereon may be provided, wherein the program is to make a computer execute a method described in the above embodiments. The computer readable medium may include any data storage device, such as read-only memory (ROM), random-access memory (RAM), CD-ROMs, magnetic tapes, floppy disks and optical data storage devices.

A further embodiment is directed to an imaging system. The imaging system may include an image processing device for determining a disparity value for each image element in a first image with respect to a second image in accordance with the above embodiments; and an image render for rendering the first image and the second image dependent on the determined disparity values.

In an embodiment, the imaging system may further include a 3D content creator configured to generate 3D images or 3D video. Examples of the 3D content creator may include two cameras configured to capture images or video from different perspective, a stereo camera, and a 3D camcorder.

In a further embodiment, the imaging system may include an encoder and/or a decoder configured to encode and decode the 3D content, respectively.

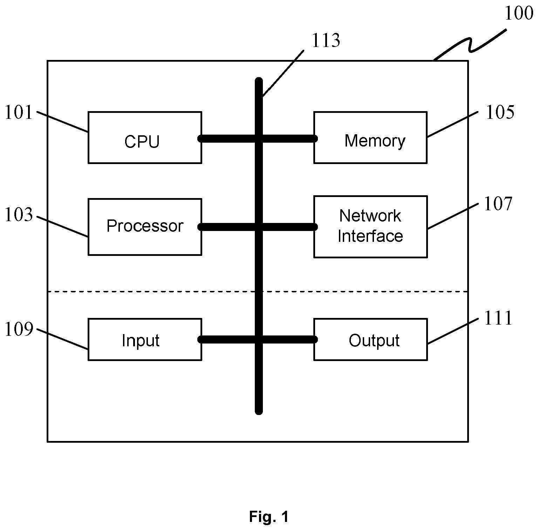

In this context, the image processing device and the imaging system as described in this description may each include a memory which is for example used in the processing carried out by the image processing device and the imaging system. A memory used in the embodiments may be a volatile memory, for example a DRAM (Dynamic Random Access Memory), or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magneto resistive Random Access Memory) or a PCRAM (Phase Change Random Access Memory). FIG. 1 shows a schematic diagram of an image processing device according to various embodiments.

The image processing device 100 may be implemented by a computer system. In various embodiments, the cost value determination circuit, the amended cost value determination circuit, and the disparity determination circuit may also be implemented as modules executing on one or more computer systems. The computer system may include a CPU 101 (central processing unit), a processor 103, a memory 105, a network interface 107, input interface/devices 109 and output interface/devices 111. All the components 101, 103, 105, 107, 109, 111 of the computer system 100 are connected and communicating with each other through a computer bus 113.

The memory 105 may be used as for storing images, cost values corresponding to the disparity candidates; amended cost values corresponding to the disparity candidates; and disparity values for the images determined according to the method of the embodiments. The memory 105 may include more than one memory, such as RAM, ROM, EPROM, hard disk, etc. wherein some of the memories are used for storing data and programs and other memories are used as working memories.

In an embodiment, the memory 105 may be configured to store instructions for determining disparity values for image elements in a first image with respect to a second image according to various embodiments. The instructions, when executed by the CPU 101, may cause the CPU 101 to determine determining a cost value for each disparity candidate based on an intensity difference between the image element in the first image and a corresponding image element in the second image determined using the respective disparity candidate, determine an amended cost value for each disparity candidate based on the cost value and at least one of a first term and a second term, and determine a disparity value for the image element based on the amended cost values of the disparity candidates. The instruction may also cause the CPU 101 to store the cost values, the amended cost values and the disparity values determined according to the method of the embodiments in the memory 105.

In various embodiments, the images may be taken by means of a camera, e.g. a video camera, e.g. a 3D video camera. Alteratively, the images may be received, e.g. via a computer network (e.g. the Internet) or via another Wide Area Network (WAN).

In another embodiment, the processor 103 may be a special purpose processor, in this example, an image processor, for executing the instructions described above.

The CPU 101 or the processor 103 may be used as the image processing device as described in various embodiments below, and may be connected to an internal network (e.g. a local area network (LAN) or a wide area network (WAN) within an organization) and/or an external network (e.g. the Internet) through the network interface 107.

The Input 109 may include a keyboard, a mouse, etc. The output 111 may include a display for display the images processed in the embodiments below.

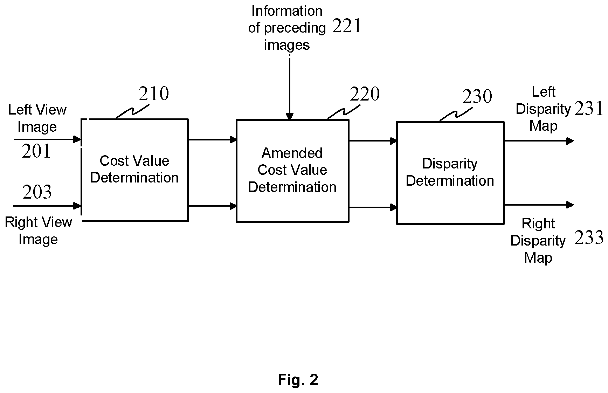

FIG. 2 shows a flow diagram according to various embodiments.

In the method of various embodiments, the disparity values of a first image with respect to a second image may be estimated or determined based on stereoscopic correspondence, in which a correspondence search may be performed to find a second image element in the second image corresponding to a first image element in the first image using a matching block or window surrounding the image elements. The similarity between the image elements may be measured by a cost function calculated, e.g., based on sum of squared difference, sum of absolute difference or normalized correlation, etc. The image element in the second image which gives the minimum value of the cost function indicates a best match with the first image element in the first image and may be determined to be the corresponding second image element. Accordingly, the disparity between these corresponding image elements may be determined as the disparity for the first image element of the first image.

According to various embodiments, disparity values may be determined for an image pair including a first (digital or digitized) image corresponding to a left view image 201 and a second (digital or digitized) image corresponding to a right view image 203, in which case the image pair may be referred to as a stereo image pair. The images 201, 203 may include intensity values for image elements in the images. It is understood that the images 201, 203 may be an image frame pair from a video including a sequence of image frame pairs, and the disparity values may be determined for the sequence of image frame pairs according to the method of various embodiments. For the purpose of simplicity, the method and device in this description is described with regard to an image frame pair, but it is understood that the method and device of the embodiments may apply similarly to each image frame pair of a video stream. The images 201, 203 may be received via a network interface, or may be stored on a data storage.

Based on the information provided in the left view image 201 and the right view image 203, the cost values for each disparity candidate of a plurality of disparity candidates are determined for each image element at 210. For an image element in a row of the left view image 201, a cost value for each disparity candidate is determined based on an intensity difference between the image element in the left image 201 and a corresponding image element in the right image 203 determined using the respective disparity candidate. The position of the corresponding image element in the right image 203 is determined by the position of the image element in the left image 201 shifted by the respective disparity candidate.

For each disparity candidate of the image element in the left image 201, an amended cost value is determined at 220 based on the cost value determined at 210, and at least one of a first term and a second term.

The first term is based on disparity values of one or more image elements from one or more preceding rows in the same left image 201. In an embodiment, the left image 201 is processed in scan order, such that the disparity values are finalized for the current row before starting the disparity determination for the next row. In one example, if the scan order is from top to bottom, the preceding rows are the rows above the current row. If the scan order is from bottom to top, the preceding rows are the rows below the current row. The finalized disparity values of the image elements from the preceding rows in the same left image 201 are used to determine the first term, the preceding rows may include the immediately adjacent row and/or the rows further away than the immediately adjacent row.

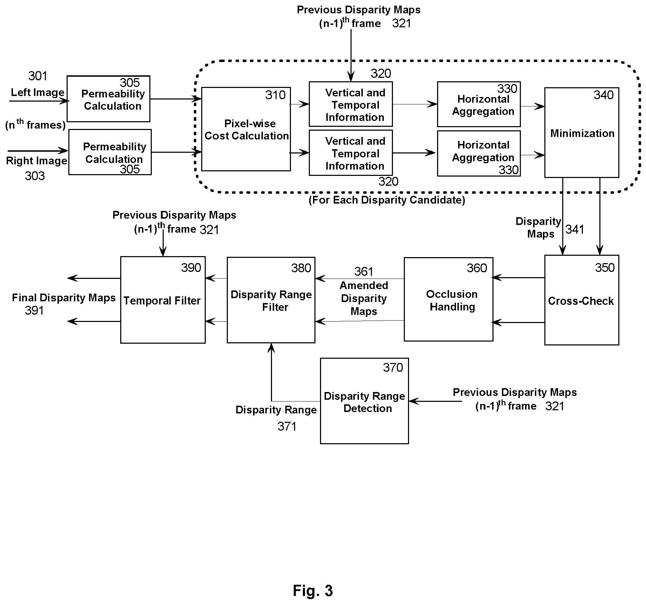

In an embodiment, the first term may be based on first disparity differences between the disparity candidate and the disparity values of the one or more image elements from the one or more preceding rows in the left image 201. In this manner, vertical information, i.e. disparity information of image elements in vertical direction is taken into consideration in amending the cost values. According to an embodiment, a first weighting factor corresponding to each of the one or more image elements from the one or more preceding rows is determined based on the intensity value of the respective one or more image elements. The first weighting factor may also be referred to as permeability weights, and will be described in more detail with reference to Fig. 3 below. The first term may be determined to be a sum of the first disparity differences weighted by the respective first weighting factors. The second term may be based on a disparity value of a corresponding image element in a preceding left image having the same position as the image element in the left image 201. The preceding left image is a left image frame preceding the current left image frame 201 in the video. The information of preceding images 221, such as intensity values and disparity values of preceding images, may be provided to the amended cost value determination block 220.

In an embodiment, the second term may be based on a second disparity difference between the disparity candidate and the disparity value of the corresponding image element in the preceding left image. In this manner, temporal information, i.e. disparity information of image elements in a previous image frame is taken into consideration in amending the cost values. According to an embodiment, a second weighting factor corresponding to the corresponding image element in the preceding left image is determined based on the intensity value of the corresponding image element. The second weighting factor may also be referred to as permeability weights, and will be described in more detail with reference to Fig. 3 below. The second term may be determined to be the second disparity difference weighted by the second weighting factor.

Upon determining the amended cost values for the plurality of disparity candidates, a disparity candidate out of the plurality of disparity candidates may be determined as the disparity value for the image element in the left image 201 at 230 based on the amended cost values. In an embodiment, a disparity candidate having the minimum amended cost value is determined as the disparity value for the image element.

In one embodiment, the amended cost values for the image element may be further amended by aggregating amended cost values determined for all image elements in the same row as said image element. In an embodiment, the aggregated cost value for each disparity candidate is determined to be a weighted sum of the amended cost values for all image elements in the same row, wherein each amended cost value is weighted based on the intensity value of the respective image element which said amended cost value corresponds to. The weights used for weighting the amended cost values may also be referred to as permeability weights, and will be described in more detail with reference to Fig. 3 below. According to an embodiment, a disparity candidate having the minimum aggregated cost value is determined out of the plurality of disparity candidates as the disparity value for the image element in the left image 201 at 230.

The cost value determination at 210, the amended cost value determination at 220, and the disparity determination at 230 may be performed for all the image elements in the left view image 201. Accordingly, a left disparity map 231 may be determined including disparity values for all image elements in the left view image 201 with respect to the right view image 203. The operations described in the above embodiments are performed for image elements in the left image 201 with respect to the right image 203, and may be similarly performed for all elements in the right image 203 with respect to the left image 201 to obtain a right disparity map 233.

The left disparity map 231 and the right disparity map 233 may be used, e.g. by an image render, together with the images 201, 203 to provide 3D image/video for display.

The image element described in the various embodiments in the description may be a pixel. In another embodiment, the image element may include a plurality of pixels, such as a block of picture elements or any object including a plurality of picture elements. The cost value, the amended cost value, the weighting factors, and the disparity value may be determined for each pixel (in other words, pixel-wise) or each block (in other words, block-wise) of pixels accordingly.

In determining the disparity values for an image, the embodiments as described above take the information of preceding rows in the same image and the information of the preceding image into consideration, which determines the disparity values with increased accuracy. In addition, by determining the minimum cost value for disparity candidates, it is not necessary to store all cost values for all disparity candidates. Instead, the cost values may be updated successively for each disparity candidate, and the disparity map is only updated in case a respective cost value for a pixel and a disparity candidate is lower than the cost value of the same pixel for the previous disparity candidates.

The left disparity map 231 and the right disparity map 233 may be further processed, for example, to detect occluded regions within the images, amend disparity values of the occluded regions, and remove noise and errors, etc. as will be further described with reference to Fig. 3 below.

FIG. 3 shows a flow diagram according to various embodiments.

In Fig. 3, disparity maps for image elements in a left image 301 and a right image 303 of the nth frames of a sequence of frames are determined. In this embodiment, the image element is a pixel. In an embodiment, the disparity map determination may be performed in a down-sampled domain, e.g. the width and height of the down-sampled image may be a decreased version of the original image size by a factor of 4. In this embodiment, the disparity determination is performed in the top-to-bottom scan order, such that the disparity values are finalized for the current row before proceeding to determine the disparity values for the next row. In this manner, finalized disparity values of the preceding rows may be utilized in determining the cost values of the current row to provide smoothness.

The permeability calculation block 305 is provided to calculate permeability weights for image elements in the left image 301 and the right image 303. In various embodiments, the permeability weights for an image element may be determined in six directions including five spatial directions and one temporal direction. The permeability weights may be determined in less than or more than six directions in other embodiments. The permeability weights represents the ration of information that passes through the image element in the corresponding direction.

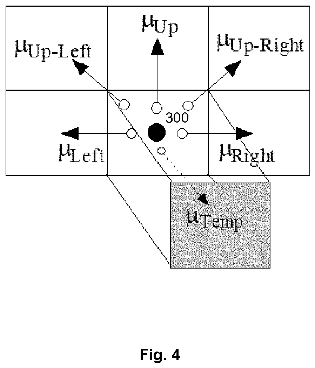

FIG. 4 shows the permeability weights determined for an image element 300 according to an embodiment. The permeability weights are measured by comparing the intensity values of the centre image element 300 with six neighbours. The intensity similarity of the centre image element 300 with the neighbouring image elements determines the permeability of information through the image element 300 in the corresponding direction.

In an embodiment, the images 301, 303 may be grayscale images, and the permeability weight is a weighting value in the range of (0, 1) determined based on the absolute intensity difference between the image element 400 and the neighbouring image elements. In another embodiment, the images 301, 303 may be colour images, represented using RGB colour model or other colour models, such as CMYK (cyan, magenta, yellow and key). In this example, the images 301, 303 are RGB images, and the permeability weights may be determined based on the absolute colour differences between the image element 300 and the neighbouring image elements in accordance with the following equation:

$$\mu = \min(e^{-\Delta R/\sigma}, e^{-\Delta G/\sigma}, e^{(\Delta B/\sigma)}) \qquad (1)$$

wherein $\Delta R$, $\Delta G$ and $\Delta B$ represent the absolute difference between the R, G and B values of the two image elements, $\sigma$ represents a smoothing factor, and $\mu$ represents the permeability weight. The permeability weight $\mu$ is determined by taking the minimum weight among RGB colour differences.

In an embodiment, the permeability weights of an image element (x, y) in six directions as shown in Fig. 4 may be determined according to the following equations:

$$[\Delta R \ \Delta G \ \Delta B] = |I_{RGB}(x, y) - I_{RGB}(x-1, y)|$$

$$\mu_{Left}(x, y) = \min(e^{-\Delta R/\sigma}, e^{-\Delta G/\sigma}, e^{-\Delta B/\sigma}) \qquad (2)$$

$$[\Delta R \ \Delta G \ \Delta B] = |I_{RGB}(x, y) - I_{RGB}(x+1, y)|$$

$$\mu_{Right}(x, y) = \min(e^{-\Delta R/\sigma}, e^{-\Delta G/\sigma}, e^{-\Delta B/\sigma}) \qquad (3)$$

$$\left[\Delta R \ \Delta G \ \Delta B\right] = \left| I_{RGB}(x,y) - I_{RGB}(x-1,y-1) \right|$$

$$\mu_{Up-Left}(x,y) = \min(e^{-\Delta R/\sigma}, e^{-\Delta G/\sigma}, e^{-\Delta B/\sigma}) \tag{4}$$

$$\left[\Delta R \ \Delta G \ \Delta B\right] = \left| I_{RGB}(x,y) - I_{RGB}(x,y-1) \right|$$

$$\mu_{Up}(x,y) = \min(e^{-\Delta R/\sigma}, e^{-\Delta G/\sigma}, e^{-\Delta B/\sigma}) \tag{5}$$

$$\left[\Delta R \ \Delta G \ \Delta B\right] = \left| I_{RGB}(x,y) - I_{RGB}(x+1,y-1) \right|$$

$$\mu_{Up-Right}(x,y) = \min(e^{-\Delta R/\sigma}, e^{-\Delta G/\sigma}, e^{-\Delta B/\sigma}) \tag{6}$$

$$\left[\Delta R \ \Delta G \ \Delta B\right] = \left| I^{t}_{RGB}(x,y) - I^{t-1}_{RGB}(x,y) \right|$$

$$\mu_{Temp}(x,y) = \min(e^{-\Delta R/\sigma}, e^{-\Delta G/\sigma}, e^{-\Delta B/\sigma}) \tag{7}$$

wherein $\mu_{Left}(x, y)$, $\mu_{right}(x, y)$, $\mu_{Up-Left}(x, y)$, $\mu_{Up}(x, y)$, $\mu_{Up-Right}(x, y)$ represent the permeability weights of the image element 300 in the left, right, up-left, up and up-right directions, respectively, and may be referred to as spatial permeability weights. $\mu_{Temp}(x, y)$ represesnts the permeability weights of the image element 300 in the temporal direction considering the intesity change between the previous image frame t-1 and the current image frame t, and may be referred to as a temporal permeability weight. $I_{RGB}(x, y)$ represents the Red colour value, the Green colour value or the Blue colour value of the image element (x, y), respectively e represents the exponential function.

In accordance with the above embodiments, a larger intensity difference between the image element 300 and an image element in the corresponding direction would produce a smaller permeability weight in the corresponding direction, indicating less information passing through the image element 300 into the corresponding direction. In the above embodiment, exponential function is used in determining the permeability weights. In another embodiment, other monotonically decreasing functions which provide output values between 0 and 1 may be used to determine the permeability weights. Furthermore, in alternative embodiments, the permeability weights of an image element may be determined taking into account image elements which are located further away from the image element the permeability weights are determined for; by way of example, one or more pixels may be arranged (which may be ignored or which may also be taken into account) between the image element the permeability weights are determined for and the respective permeability weight image element. Furthermore, in case the scanning direction is different, e.g. the inverse direction to the direction as described above, permeability weights of the image element 300 may be determined in the left, right, down-left, down and down-right directions, respectively.

For each image element in the images 301, 303, a list of six permeability weights are calculated at 305. Accordingly, two permeability maps for images 301, 303 may be output from the permeability calculation block 305.

The cost values for each image element are determined for each disparity candidate at a pixel-wise cost calculation block 310. In an embodiment, disparity assignment for a stereo image pair may be in horizontal direction only, and the search is conducted by shifting the pixel along the horizontal direction only. A fixed search range may be exploited. In an embodiment, the cost value for a disparity candidate is determined based on an intensity difference between the image element in the left image 201 and a corresponding image element in the right image 203 determined using the corresponding disparity candidate.

In an embodiment wherein the images 201, 203 are RGB colour images, the cost value may be determined based on the sum of RGB value differences in accordance with the equation below:

$$Cost_{Left}(x,y,d) = \min(\sum_{i=1}^{3}\left|I_{Left}(x,y,i) - I_{Right}(x+d,y,i)\right|, T)$$

$$Cost_{Right}(x,y,d) = \min(\sum_{i=1}^{3}\left|I_{Right}(x,y,i) - I_{Left}(x+d,y,i)\right|, T)$$

$$(8)$$

wherein $Cost_{Left}(x,y,d)$ represent the cost value of the pixel (x, y) in the left image for a disparity candidate d, and $Cost_{Right}(x,y,d)$ represents the cost value of the pixel (x, y) in the right image for a disparity candidate d. $I_{Left}$ and $I_{Right}$ represents the RGB values in the left image and the right image. T represents the truncation of the cost values in order to reduce the effect of noise.

Since the cost values of the left image and the right image are related to each other, only one calculation for either left image or right image is needed and the cost values are copied for the other image.

The cost values calculated in block 310 correspond to the colour-wise similarity between the pixels in left and right images 301, 303 for various disparity candidates. These cost values may be amended by enforcing smoothness in the vertical domain and temporal domain at 320 as described below.

According to an embodiment, the amended cost values are determined at 320 based on the cost value of the image element and at least one of a first term and a second term, wherein the first term is based on disparity values of one or more image elements from one or more preceding rows in the first image, and the second term is based on a disparity value of a corresponding image element in a preceding first image having the same position as the image element in the first image.

In an embodiment, the amended disparity value for the image element (x, y) in the left image may be determined in accordance with the following equation:

$$\begin{aligned} C_{Left}(x,y,d) \ &= Cost_{Left}(x,y,d) + \\ &\mu_{Up-Left}(x,y).\left|d - D(x-1,y-1)\right| + \\ &\mu_{Up}(x,y).\left|d - D(x,y-1)\right| + \\ &\mu_{Up-Right}(x,y).\left|d - D(x+1,y-1)\right| + \\ &\mu_{Temp}(x,y).\left|d - D^{t-1}(x,y)\right| \end{aligned}$$

$$(9)$$

wherein $C_{Left}(x,y,d)$ represent the amended cost value of the pixel (x, y) in the left image for a disparity candidate d, and $Cost_{Left}(x,y,d)$ represents the cost value of the pixel (x, y) for the disparity candidate d determined according to equation (8). $D(x-1, y-1)$ represents the finalized disparity value determined for the pixel (x-1, y-1) in an upper row of the same image. $D^{t-1}(x,y)$ represents the finalized disparity value determined for the pixel (x, y) in the previous left image t-1.

According to the above embodiments, a smoothness constraint is provided by weighting the difference between the disparity candidate value (d) and the determined disparity values of the previous row using permeability weights for the corresponding direction. Moreover, the disparity map of the previous frame (Dt-1) 321 is also constrained by the temporal variation of the pixel. According to the embodiment of equation (9), the disparity values of the preceding row and the previous frame in time are favoured as long as the colour variation of the pixel (x,y) is low in the corresponding directions.

In the embodiment of equation (9), disparity values of three pixels in the immediately adjacent row in the up-left, up and up-right directions are taken into consideration when determining the amended cost value. It is understood that more or less than three pixels in the immediately adjacent row and/or pixels in one or more rows further away from the immediately adjacent row may be used to determine the amended cost value.

In the embodiment of equation (9), both disparity values of the upper row (which correspond to the first term) and the disparity value of the previous frame (which corresponds to the second term) are used in determining the amended cost value. In other embodiment, only one of the two terms may be used to determine the amended cost value, so as to provide smoothness constraint in either vertical domain or temporal domain.

The operations using vertical and temporal information at 320 above are also performed for the right image 303. Through block 320, the general disparity distribution among the image is extracted by transferring information from all possible directions involving vertical and temporal relations.

Based on the amended cost values output from the block 320, a disparity value for the image element may be determined. In an embodiment, the disparity candidate having the minimum amended cost values among the plurality of disparity candidates are determined at the minimization block 340 to be the disparity value for the image element.

In another embodiment, before determining the disparity value, the amended cost values may be further processed by a horizontal integration at a horizontal aggregation block 330, which provides pixel-wise cost values to be supported in the horizontal direction using the permeability weights determined at block 305.

The input to the horizontal aggregation block 330 is the amended cost map output from block 320 and the permeability maps output from block 305, and the output is the aggregated cost map.

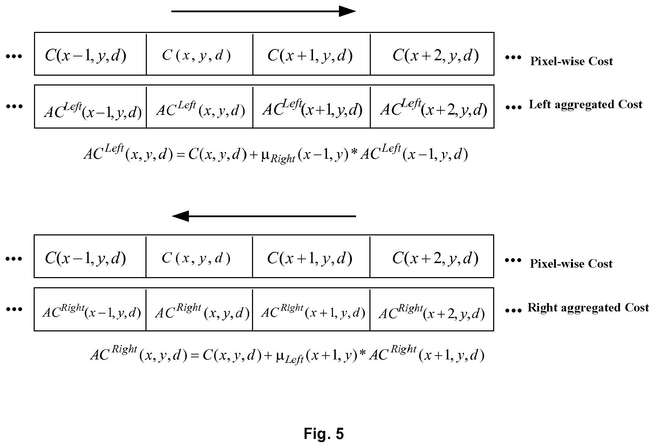

The horizontal aggregation at 330 is performed by weighted integration in the left and right scan order consecutively for each row independently. FIG. 5 illustrates the aggregation of amended cost values according to an embodiment. As illustrated in Fig. 5, amended pixel-wise cost values are summed towards left and right directions using the permeability weights in left and right directions, respectively, resulting in two different aggregated costs (AC) for each pixel from opposite directions.

In an embodiment, the aggregated costs from left and right directions are determined in accordance with the following equation:

$$AC^{Left}(x,y,d) = C(x,y,d) + \mu_{Right}(x-1,y) * AC^{Left}(x-1,y,d)$$

$$AC^{Right}(x,y,d) = C(x,y,d) + \mu_{Left}(x+1,y) * AC^{Right}(x+1,y,d)$$

$$AC^{H}(x,y,d) = AC^{Left}(x,y,d) + AC^{Right}(x,y,d) \tag{10}$$

wherein $AC^{Left}(x,y,d)$ represents the aggregated cost value from the left of the image element (x,y), and $AC^{Right}(x,y,d)$ represents the aggregated cost value from the right of the image element (x,y). $AC^{H}(x,y,d)$ represents the final aggregated cost value for the image element (x,y).

According to the above embodiment, the information from the left direction is carried out through permeability of pixels into the right direction, and vice-versa for the right direction. The two aggregated cost values from both directions are summed up to obtain the final horizontal aggregation value. During the weighted integration, permeability weights enables information to penetrate through smooth surfaces, while prevents information passing from edge regions. This would allow object boundaries to be preserved during the support calculation of the cost values. As a result of the horizontal integration, depending on the texture characteristics among the corresponding row, a weighted summation among the entire row (corresponding to horizontal window of image width) is obtained for each pixel with constant computation complexity, i.e. two multiplications and three additions for one pixel.

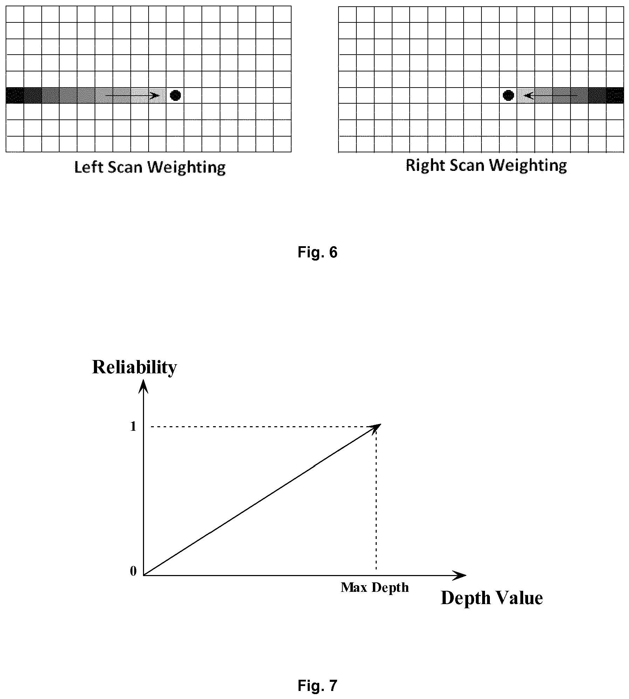

According to the above embodiment, the information from pixels further away from the current pixel penetrates by the consecutive multiplications of the permeability values. FIG. 6 illustrates the permeability weight distribution according to an embodiment. As shown in Fig. 6, dark pixels indicate permeability weights close to "0", and bright pixels indicate permeability weights close to "1". The penetration approach provides connected support areas for each pixel, wherein the effective permeability weights decrease as the distance to the corresponding pixel increases.

In accordance with the above embodiments, the aggregated cost value for each disparity candidate is determined at 330. The cost value determination at block 310, the amended cost value determination at block 320 and the aggregation of the amended cost values at block 330 are preformed for each disparity candidate of the image element. At minimization block 340, the disparity candidate having the minimum aggregated cost is determined and is assigned to the corresponding pixel. The aggregation is performed for amended cost maps of both views, and the disparity maps 341 for both views are determined.

In a further embodiment, the disparity maps 341 determined for left and right images independently above may be further processed as described above.

Emerging from the same 3D scene, the disparity maps for left view and right view should be consistent with each other. In an embodiment, a consistency cross-check is performed at block 350 to detect reliable disparity assignments. Each pixel in the left disparity map may be shifted by the assigned disparity value to the right disparity map, and the corresponding disparity value in the right disparity map is compared with the assigned disparity value in the left disparity map. If the difference between the disparity values is below a predetermined threshold, corresponding pixel in the left view is marked as reliable. If the difference is above the predetermined threshold, the pixel is marked as unreliable.

In an embodiment, the reliability detection for a pixel (x, y) in the left disparity map is performed in accordance with the following equation:

$$diff = \left| D_{Left}(x, y) - D_{Right}(x + D_{Left}(x, y), y) \right|$$

$$Left\_Reliability(x, y) = \begin{cases} diff < Threshold & 1 \\ else & 0 \end{cases}$$

(11)

wherein $D_{Left}(x,y)$ represents the determined disparity value of the pixel (x, y) in the left disparity map, $D_{Right}(x+D_{Left}(x, y),y)$ represents the determined disparity value of the shifted pixel $(x+D_{Left}(x,y),y)$ in the right disparity map. $Left\_Reliability(x,y)$ represents the reliability of the pixel (x, y) in the left view.

The reliability detection is repeated for the right disparity map to determine the reliability of pixels in the right view. The output of the cross-check block 350 includes two reliability maps assigning "1" for reliable pixels and "0" for the unreliable pixels.

In a further embodiment, occluded regions and detected unreliable disparity assignments are processed at an occlusion handling block 360. Occluded pixels are normally located among the depth discontinuities where object boundaries exist. The foreground objects have larger disparities, and thus occluding the background where the depth is larger. As a result, it may be concluded that occluded regions belong to the local background around the depth discontinuities. According to an embodiment, the missing disparity assignments of the occluded regions may be copied through the background. The characteristics of the occluded regions may also be taken into consideration in the occlusion handling at 360. In that manner, the proposed method at block 360 gives bias to the large depth assignments and performs a support strategy similar to the cost aggregation at block 330 above. In an embodiment, the disparity assignments of the occluded regions are performed by weighted averaging over reliable pixels based on depth ordering and intensity similarity.

In an embodiment, a linear function with the range of (0, 1) is applied to the un-occluded pixels, which assigns "1" for pixels having the highest depth assignments, "0" for pixels having the lowest depth assignments and a value between "0" and "1" for the remaining pixels. The characteristic of the reliability mapping function is illustrated in FIG. 7. This mapping function favours higher depth values, since the occluded regions belong to the local backgrounds in all cases. As a result, two maps for stereo pairs are obtained indicating reliability values, such that unreliable pixels are assigned to "0", and values between (0, 1) are assigned to the reliable pixels depending on the initial disparity values.

At occlusion handling block 360, the disparity values are scaled by the reliability values in accordance with equation (12) below, in order to prevent information of occluded (unreliable) regions, decrease the effect of foreground regions for occlusion handling and give more importance to reliable background regions which are the strongest supports for occlusions.

In an embodiment, a horizontal aggregation is performed on the scaled disparity values similar to the horizontal aggregation of cost values at 330. The aggregation may be performed by determining a weighted summation of the scaled disparity values weighted by the permeability weights. An embodiment of the aggregation is performed in accordance with equation (13) below. In order to determine the proper disparity assignment for the occluded pixel, the weighted summation may be normalized by the summation of the reliability weights, which can be obtained by aggregation over reliability values. Accordingly, the reliability maps are also aggregated in the horizontal direction. The weighted summation of data composed of reliability values result in a total weight that are utilized during weighted summation of the depth data for each pixel. Two maps are obtained, wherein the weighted sum of disparity values and the total weight are stored. Hence, the amended disparity values may be achieved by a normalization step as in equation (13), wherein the background disparity assignments are favoured to fill the occluded region.

$$D_{Left}^{weight}(x, y) = D_{Left}(x, y).Left\_Reliability(x, y)$$

$$D_{Right}^{weight}(x, y) = D_{Right}(x, y).Right\_Reliability(x, y)$$

(12)

$$D^{Norm}(x,y) = \frac{PF(D^{weight}(x,y))}{PF(\text{Re}liability(x,y))} \tag{13}$$

wherein $D_{Left}^{weight}(x,y)$ represents the scaled disparity value for the pixel (x, y) in the left disparity map, $D_{Right}^{weight}(x,y)$ represents the scaled disparity value for the pixel (x, y) in the right disparity map. $D^{Norm}(x,y)$ represents the amended disparity value for the pixel (x, y). PF represents the aggregation function performed in left and right directions in accordance with equation (10) above.

In accordance with the embodiment of equation (13), the normalization step is performed through dividing the weighted disparity sums by sum of weights. As a result, the occluded regions are filled by filtering disparity assignments of reliable regions, wherein background pixels (the depth of which is larger) are favoured during filtering. This operation is performed for both left and right images independently and the amended disparity maps 361 are obtained.

Due to large occluded regions, noise and reflection caused by lightening conditions, the amended disparity maps 361 may include erroneous disparity values. For example, disparity values which are out of the range of the actual (true) 3D scene may be included in the amended disparity maps 361. According to an embodiment, a disparity range detection is performed at block 370 and a disparity range filtering is performed at block 380 to remove outlier disparity values which are most probably out of the disparity range.

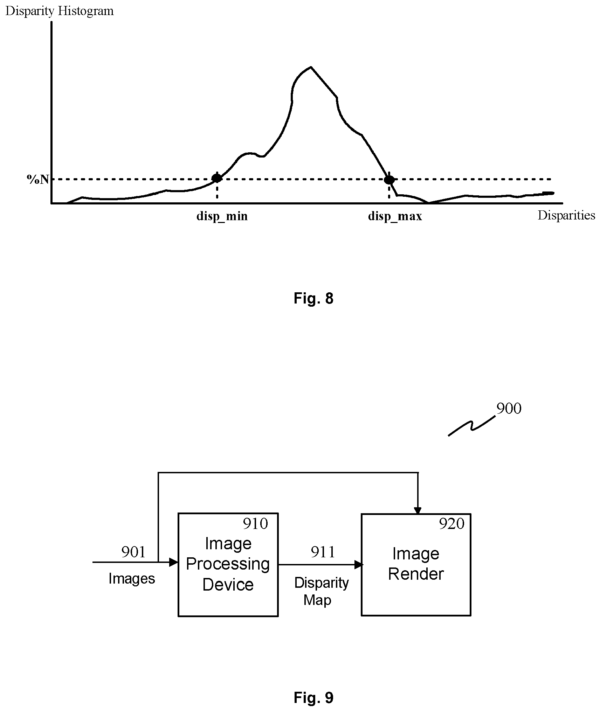

In block 370, final disparity maps 321 of left and right views (for the previous frame) are input for detecting the disparity range, which will be exploited in the current frame in absence of scene change. According to an embodiment, a histogram of the disparity maps 321 of the previous frame is determined, as shown in FIG. 8. A thresholding is performed to determine the minimum and maximum disparities in the scene. The thresholding may provide robustness against noise, since a disparity value is determined to be existent or correct if the frequency of that disparity value is higher than a predetermined threshold, e.g. a predetermined ration of the image size (%N). Examples of the threshold may be 1%, 2%, 5%, 8%, 10%, 15%, 20%, or other suitable percentage of the image size. The frequency of a disparity value represents the number of image elements having that disparity value. Based on the predetermined threshold, a maximum disparity value "disp_max" and a minimum disparity value "disp_min" are determined to define the disparity range of the previous stereo frame. In this embodiment, the disparity range detection is performed on the previous disparity map 321 of the previous frame due to hardware constraints, such as timing. In other embodiments, if the hardware performance allows, the disparity range detection at block 370 may also be performed on the amended disparity maps 361 of the current image frame.

At the disparity range filter block 380, the disparity range detected in block 370 is utilized to remove outliers in the amended disparity maps 361 output from the occlusion handling block 360. According to an embodiment, the extracted disparity values out of the detected disparity range are assigned as the bounds of the disparity range. For example, if a disparity value for an image element in the amended disparity maps 361 is smaller than the minimum disparity value, the disparity value of the image element is amended to be the minimum disparity value. Similarly, if a disparity value for an image element in the amended disparity maps 361 is larger than the maximum disparity value, the disparity value of the image element is amended to be the maximum disparity value.

In a further embodiment, the disparity maps after the disparity range filter 380 is further amended in consideration of disparity maps of the previous frame, so as to determine final disparity maps 391. In an embodiment, the final disparity value of the image element may be determined based on the amended disparity value of said image element, the disparity value and intensity value of the corresponding image element in the preceding image frame having the same position as said image element in the current image frame. This embodiment is preformed at a temporal filter 390, in which the range filtered disparity maps are further filtered in the temporal domain in order to remove possible flickers.

In an embodiment, the temporal filter may be performed in accordance with the following equation, based on the disparity maps of the previous frame and the temporal permeability weights determined in equation (7).

$$D^{t}(x,y) = (1 - \mu_{Temp}(x,y)).D^{t}(x,y) + \mu_{Temp}(x,y).D^{t-1}(x,y) \tag{14}$$

wherein $D^{t}(x,y)$ and $D^{t-1}(x,y)$ represent the disparity values of the pixels (x, y) in the current frame disparity map and in the previous frame disparity map, respectively.

The temporal filter 390 makes colour-wise non-alternating pixels (whose temporal weight is high) in the current frame to be consistent with the previous frame in terms of the disparity values. The colour-wise altering pixels (whose temporal weight is low) in the current frame are not constrained to be consistent with the previous frame in terms of the disparity values.

Various embodiments above provide a method for determining disparity values for stereo image/video, which utilizes information of preceding rows and information of preceding image to achieve a more precise disparity determination. The embodiments determine disparity values by exploiting horizontal and vertical information transfer. Embodiments further provide a disparity determination method based on local optimization through a fast and efficient local cost aggregation over horizontal support area for each pixel. The support calculation strategy depends on the information permeability characteristics of pixels in the spatial and temporal directions based on the intensity similarities with the neighbouring pixels. The permeability weights enable the information to pass through smooth/texture-less regions, while preventing information passing from edge pixels. For each image element, a plurality of spatial permeability weights and temporal permeability weight are determined, followed by pixel-wise cost calculation depending on RGB differences between the pixels in left and right views, deviation from the previously estimated upper row disparity assignments and the deviation from the disparity map of the previous frame. Pixel-wise cost values may be aggregated by a two-pass weighted integration strategy in horizontal direction. By utilizing the permeability weights for the corresponding direction, horizontal weighted summation is achieved in right and left scan order. This approach provides support area for each pixel depending on the texture characteristics with a low computational complexity. The cost value determination, amendment and aggregation are performed for each disparity candidate, and the disparity candidate which achieves the minimum supported cost is assigned to the corresponding image element. The vertically constrained cost values corresponding to disparities are supported in a wide range involving the pixels in the same row and the upper rows. This may increase the smoothness and robustness of the estimated disparity maps. A row-wise processing is performed in scan order, wherein the process of the next row starts when the current row disparity assignment is finalized.

In further embodiments, after the disparity assignment is determined for both views, a left-right consistency check is performed to detect the reliable and occluded regions. The occlusion handling is achieved by a similar weighted filtering over reliable disparity estimates. During the occlusion handling, bias is given for the pixels having large depth assignments, since most of the occluded regions are the background pixels around depth discontinuities. Temporal filtering with the disparity map of the previous frame may finalize the disparity estimation algorithm, which provides two disparity maps for left and right views modelling the 3D structure of the scene and enabling depth adjustment and depth based image enhancement for 3D Televisions on stereo contents. The temporal filtering enables temporally consistent and flicker-free disparity maps. The method of various embodiments may also be extended to 3D model extraction from views captured through multiple cameras. FIG. 9 shows an imaging system according to an embodiment.

The imaging system 900 receive images 901, which may be a stereo image pair or a stereo video as described in FIGs. 2 and 3 above.

The imaging system 900 includes an image processing device 910 for determining a disparity value for each image element in a first image with respect to a second image. The image processing device 910 may generate a disparity map 911, which may be disparity maps 231, 233, 341, 361, 391 determined in accordance with various embodiments described with regard to Figs. 2 and 3 above.

An image render 930 may receive the image 901 and the determined disparity map 911 and render the image 901 for 3D display.

The imaging system 900 may be embodied in a 3D TV or a computer, for example.

While the invention has been particularly shown and described with reference to specific embodiments, it should be understood by those skilled in the art that various changes in form and detail may be made therein without departing from scope of the invention as defined by the appended claims.

**Claims**

1. A method for determining a disparity value for an image element in a row of a first image with respect to a second image, the method comprising:

    - for each disparity candidate of a plurality of disparity candidates, determining a cost value based on an intensity difference between the image element in the first image and a corresponding image element in the second image determined using the respective disparity candidate;
    - for each disparity candidate of the plurality of disparity candidates, determining an amended cost value based on the cost value of the image element, a first term and a second term, said first term being based on disparity values of one or more image elements from one or more preceding rows in the first image, and said second term being based on a disparity value of a corresponding image element in a preceding first image having the same position as the image element in the first image; and
    - determining a disparity candidate out of the plurality of disparity candidates as the disparity value of the image element in the first image based on the amended cost values of the plurality of disparity candidates;

- for each disparity candidate of the image element, determining an aggregated cost value by aggregating amended cost values determined for all image elements in the same row as said image element in the first image;
- determining the disparity candidate having the minimum aggregated cost value as the disparity value of the image element in the first image;
- for each disparity candidate of the image element, determining the first term based on first disparity differences between the disparity candidate and the disparity values of the one or more image elements from the one or more preceding rows in the first image;
- determining a first weighting factor corresponding to each of the one or more image elements from the one or more preceding rows based on the intensity value of the respective one or more image elements, wherein said first weighting factor is measured by comparing the intensity values of a centre image element with six neighbours;

- determining a sum of the first disparity differences weighted by the respective first weighting factor as the first term;
- determining whether the disparity value of the image element in the first image is reliable based on a predetermined threshold and a disparity value of the corresponding image element in the second image, said corresponding image element being determined using the disparity value of the image element in the first image;
- determining an amended disparity value for the image element in the first image based on disparity values of all image elements in the same row as said image element, reliability of said all image elements, and intensity values of said all image elements;
- determining a disparity histogram of the preceding first image, which includes, for each disparity value of a plurality of disparity values determined for image elements of the preceding first image, a frequency value indicating the number of image elements having the respective disparity value;
- determining a maximum disparity value and a minimum disparity value based on the disparity histogram, said maximum disparity value and said minimum disparity value defining a range of disparity values having frequency values higher than a predetermined threshold;
- determining the amended disparity value of the image element in the first image to be the minimum disparity value if the amended disparity value is smaller than the minimum disparity value, and determining the amended disparity value of the image element in the first image to be the maximum disparity value if the amended disparity value is larger than the maximum disparity value; and
- determining a final disparity value of the image element in the first image based on the amended disparity value of said image element, the disparity value and intensity value of the corresponding image element in the preceding first image having the same position as said image element in the first image.

2. The method of claim 1, further comprising:

- for each disparity candidate of the image element, determining the second term based on a second disparity difference between the disparity candidate and the disparity value of the corresponding image element in the preceding first image.

3. The method of claim 2, further comprising:

- determining a second weighting factor corresponding to the corresponding image element in the preceding first image based on the intensity value of the corresponding image element; and
- determining the second disparity difference weighted by the second weighting factor as the second term.

4. The method of claim 1, wherein

- determining the aggregated cost value for the image element in the first image comprises determining a weighted sum of the amended cost values determined for all image elements in the same row, each amended cost value being weighted based on the intensity value of the respective image element which said amended cost value corresponds to.

**Patentansprüche**

1. Verfahren zum Bestimmen eines Disparitätswertes für ein Bildelement in einer Zeile eines ersten Bildes in Bezug auf ein zweites Bild, wobei bei dem Verfahren:

   für jeden Disparitätskandidaten aus einer Vielzahl von Disparitätskandidaten auf Basis einer Intensitätsdifferenz zwischen dem Bildelement in dem ersten Bild und einem entsprechenden Bildelement in dem zweiten Bild, das durch Verwendung des jeweiligen Disparitätskandidaten bestimmt ist, ein Kostenwert bestimmt wird,
   für jeden Disparitätskandidaten aus der Vielzahl von Disparitätskandidaten ein verbesserter Kostenwert auf Basis des Kostenwertes des Bildelements, ein erster Term und ein zweiter Term bestimmt wird, wobei der erste Term auf Disparitätswerten von einem oder mehreren Bildelementen aus einer oder mehreren vorhergehenden Zeilen in dem ersten Bild basiert und wobei der zweite Term auf einem Disparitätswert eines entsprechenden Bildelements in einem vorhergehenden ersten Bild mit derselben Position wie das Bildelement in dem ersten Bild basiert, und
   ein Disparitätskandidat aus der Vielzahl von Disparitätskandidaten als der Disparitätswert des Bildelements in dem ersten Bild auf Basis der verbesserten Kostenwerte der Vielzahl von Disparitätskandidaten bestimmt wird, für jeden Disparitätskandidaten des Bildelements ein aggregierter Kostenwert bestimmt wird, indem verbesserte Kostenwerte, die für alle Bildelemente in derselben Zeile wie das Bildelement in dem ersten Bild bestimmt sind, aggregiert werden,
   der Disparitätskandidat mit dem minimalen aggregierten Kostenwert als der Disparitätswert des Bildelements in dem ersten Bild bestimmt wird,
   für jeden Disparitätskandidaten des Bildelements der erste Term auf Basis von ersten Disparitätsdifferenzen zwischen dem Disparitätskandidaten und den Disparitätswerten von einem oder mehreren Bildelementen aus einer oder mehreren vorhergehenden Zeilen in dem ersten Bild bestimmt wird,
   ein erster Gewichtsfaktor entsprechend jedes des einen oder der mehreren Bildelemente aus der einen oder den mehreren vorhergehenden Zeilen auf Basis des Intensitätswertes des jeweiligen einen oder der mehreren Bildelemente bestimmt wird, wobei der erste Gewichtsfaktor durch Vergleichen der Intensitätswerte eines zentralen Bildelementes mit sechs Nachbarn bemessen wird,
   eine Summe der ersten Disparitätsdifferenzen gewichtet mit dem jeweiligen ersten Gewichtsfaktor als der erste Term bestimmt wird,
   auf Basis eines vorgegebenen Schwellenwertes und eines Disparitätswertes des entsprechenden Bildelements in dem zweiten Bild festgestellt wird, ob der Disparitätswert des Bildelements in dem ersten Bild verlässlich ist, wobei das entsprechende Bildelement unter Verwendung des Disparitätswertes des Bildelements in dem ersten Bild bestimmt wird,
   ein verbesserter Disparitätswert für das Bildelement in dem ersten Bild auf Basis der Disparitätswerte aller Bildelemente in derselben Zeile wie das Bildelement, der Verlässlichkeit aller Bildelemente und der Intensitätswerte aller Bildelement bestimmt wird,
   ein Disparitätshistogramm des vorhergehenden ersten Bildes bestimmt wird, das für jeden Disparitätswert aus einer Vielzahl von für die Bildelemente des vorhergehenden ersten Bildes bestimmten Disparitätswerten ein Häufigkeitswert bestimmt wird, der die Anzahl von Bildelementen, die den jeweiligen Disparitätswert aufweisen, anzeigt,
   aus dem Disparitätshistogramm ein maximaler Disparitätswert und ein minimaler Disparitätswert bestimmt werden, wobei der maximale Disparitätswert und ein minimaler Disparitätswert einen Bereich von Disparitätswerten mit Häufigkeitswerten höher als eine vorgegebene Schwelle definieren,
   der verbesserte Disparitätswert des Bildelements in dem ersten Bild gleich dem minimalen Disparitätswert gesetzt wird, wenn der verbesserte Disparitätswert kleiner als der minimale Disparitätswert ist, und der verbesserte Disparitätswert des Bildelements in dem ersten Bild gleich dem maximalen Disparitätswert gesetzt wird, wenn der verbesserte Disparitätswert größer als der maximale Disparitätswert ist, und
   ein endgültiger Disparitätswert des Bildelements in dem ersten Bild auf Basis von dem verbesserten Disparitätswert des Bildelements, Disparitätswert und Intensitätswert des entsprechenden Bildelements in dem vorhergehenden ersten Bild mit derselben Position wie das Bildelement in dem ersten Bild bestimmt wird.

2. Verfahren nach Anspruch 1, bei dem weiter:
   für jeden Disparitätskandidaten des Bildelements der zweite Term auf Basis einer zweiten Disparitätsdifferenz zwischen dem Disparitätskandidaten und dem Disparitätswert des entsprechenden Bildelements in dem vorhergehenden ersten Bild bestimmt wird.

3. Verfahren nach Anspruch 2, bei dem weiter:

ein zweiter Gewichtsfaktor entsprechend dem entsprechenden Bildelement in dem vorhergehenden ersten Bild auf Basis des Intensitätswertes des entsprechenden Bildelements bestimmt wird und

die zweite Disparitätsdifferenz gewichtet mit dem zweiten Gewichtsfaktor als der zweite Term bestimmt wird.

4. Verfahren nach Anspruch 1, bei dem
das Bestimmen des aggregierten Kostenwertes für das Bildelement in dem ersten Bild beinhaltet, eine gewichtete Summe der verbesserten Kostenwerte zu bestimmen, die für alle Bildelemente in derselben Zeile bestimmt werden, wobei jeder verbesserte Kostenwert auf Basis des Intensitätswertes des jeweiligen Bildelements, dem der verbesserte Kostenwert entspricht, gewichtet wird.

**Revendications**

1. Procédé pour déterminer une valeur de disparité pour un élément d'image dans une rangée d'une première image par rapport à une seconde image, le procédé comprenant :

- pour chaque candidat de disparité d'une pluralité de candidats de disparité, la détermination d'une valeur de coût sur la base d'une différence d'intensité entre l'élément d'image dans la première image et un élément d'image correspondant dans la seconde image déterminée en utilisant le candidat de disparité respectif ;
- pour chaque candidat de disparité de la pluralité de candidats de disparité, la détermination d'une valeur de coût amendée sur la base de la valeur de coût de l'élément d'image, d'un premier terme et d'un second terme, ledit premier terme étant basé sur des valeurs de disparité d'un ou plusieurs éléments d'image provenant d'une ou plusieurs rangées précédentes dans la première image, et ledit second terme étant basé sur une valeur de disparité d'un élément d'image correspondant dans une première image précédente ayant la même position que l'élément d'image dans la première image ; et
- la détermination d'un candidat de disparité parmi la pluralité de candidats de disparité en tant que la valeur de disparité de l'élément d'image dans la première image sur la base des valeurs de coût amendées de la pluralité de candidats de disparité ;
- pour chaque candidat de disparité de l'élément d'image, la détermination d'une valeur de coût agrégée en agrégeant des valeurs de coût amendées déterminées pour tous les éléments d'image dans la même rangée que ledit élément d'image dans la première image ;
- la détermination du candidat de disparité ayant la valeur de coût agrégée minimale en tant que la valeur de disparité de l'élément d'image dans la première image ;
- pour chaque candidat de disparité de l'élément d'image, la détermination du premier terme sur la base de premières différences de disparité entre le candidat de disparité et les valeurs de disparité du ou des plusieurs éléments d'image provenant de la ou des plusieurs rangées précédentes dans la première image ;
- la détermination d'un premier coefficient de pondération correspondant à chacun du ou des plusieurs éléments d'image provenant de la ou des plusieurs rangées précédentes sur la base de la valeur d'intensité du ou des plusieurs éléments d'image respectifs, dans lequel ledit premier coefficient de pondération est mesuré en comparant les valeurs d'intensité d'un élément d'image central à six voisins ;
- la détermination d'une somme des premières différences de disparité pondérées par le premier coefficient de pondération respectif en tant que le premier terme ;
- la détermination si la valeur de disparité de l'élément d'image dans la première image est fiable sur la base d'un seuil prédéterminé et d'une valeur de disparité de l'élément d'image correspondant dans la seconde image, ledit élément d'image correspondant étant déterminé en utilisant la valeur de disparité de l'élément d'image dans la première image ;
- la détermination d'une valeur de disparité amendée pour l'élément d'image dans la première image sur la base des valeurs de disparité de tous les éléments d'image dans la même rangée que ledit élément d'image, de la fiabilité de ladite totalité d'éléments d'image et des valeurs d'intensité de ladite totalité d'éléments d'image ;
- la détermination d'un histogramme de disparités de la première image précédente, qui inclut, pour chaque valeur de disparité d'une pluralité de valeurs de disparité déterminées pour des éléments d'image de la première image précédente, une valeur de fréquence indiquant le nombre d'éléments d'image ayant la valeur de disparité respective ;
- la détermination d'une valeur de disparité maximale et d'une valeur de disparité minimale sur la base de l'histogramme de disparités, ladite valeur de disparité maximale et ladite valeur de disparité minimale définissant une plage de valeurs de disparité ayant des valeurs de fréquence supérieures à un seuil prédéterminé ;
- la détermination de la valeur de disparité amendée de l'élément d'image dans la première image comme étant la valeur de disparité minimale si la valeur de disparité amendée est plus petite que la valeur de disparité minimale, et la détermination de la valeur de disparité amendée de l'élément d'image dans la première image comme étant la valeur de disparité maximale si la valeur de disparité amendée est plus grande que la valeur de disparité maximale ; et
- la détermination d'une valeur de disparité finale de l'élément d'image dans la première image sur la base de la valeur de disparité amendée dudit élément d'image, de la valeur de disparité et de la valeur d'intensité de l'élément d'image correspondant dans la première image précédente ayant la même position que ledit élément d'image dans la première image.

2.   Procédé selon la revendication 1, comprenant en outre :

- pour chaque candidat de disparité de l'élément d'image, la détermination du second terme sur la base d'une seconde différence de disparité entre le candidat de disparité et la valeur de disparité de l'élément d'image correspondant dans la première image précédente.

3.   Procédé selon la revendication 2, comprenant en outre :

- la détermination d'un second coefficient de pondération correspondant à l'élément d'image correspondant dans la première image précédente sur la base de la valeur d'intensité de l'élément d'image correspondant ; et
- la détermination de la seconde différence de disparité pondérée par le second coefficient de pondération en tant que le second terme.

4.   Procédé selon la revendication 1, dans lequel

- la détermination de la valeur de coût agrégée pour l'élément d'image dans la première image comprend la détermination d'une somme pondérée des valeurs de coût amendées déterminées pour tous les éléments d'image dans la même rangée, chaque valeur de coût amendée étant pondérée sur la base de la valeur d'intensité de l'élément d'image respectif auquel ladite valeur de coût amendée correspond.

**Fig. 1**

**Fig. 2**

**Fig. 3**

EP 2 657 909 B1

**Fig. 4**

21

$\cdots$ | $C(x-1,y,d)$ | $C(x,y,d)$ | $C(x+1,y,d)$ | $C(x+2,y,d)$ | $\cdots$ Pixel-wise Cost

$\cdots$ | $AC^{Left}(x-1,y,d)$ | $AC^{Left}(x,y,d)$ | $AC^{Left}(x+1,y,d)$ | $AC^{Left}(x+2,y,d)$ | $\cdots$ Left aggregated Cost

$$AC^{Left}(x,y,d) = C(x,y,d) + \mu_{Right}(x-1,y) * AC^{Left}(x-1,y,d)$$

$\cdots$ | $C(x-1,y,d)$ | $C(x,y,d)$ | $C(x+1,y,d)$ | $C(x+2,y,d)$ | $\cdots$ Pixel-wise Cost

$\cdots$ | $AC^{Right}(x-1,y,d)$ | $AC^{Right}(x,y,d)$ | $AC^{Right}(x+1,y,d)$ | $AC^{Right}(x+2,y,d)$ | $\cdots$ Right aggregated Cost

$$AC^{Right}(x,y,d) = C(x,y,d) + \mu_{Left}(x+1,y) * AC^{Right}(x+1,y,d)$$

**Fig. 5**

Left Scan Weighting          Right Scan Weighting

Fig. 6

Fig. 7

Disparity Histogram

%N

disp_min          disp_max

Disparities

**Fig. 8**

900

901
Images

910
Image
Processing
Device

911
Disparity
Map

920
Image
Render

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. WANG et al.** High-quality real-time stereo using adaptive cost aggregation and dynamic programming. *International Symposium on 3D Data Processing Visualization and Transmission,* 2006

- **CEVAHIR QIGLA ; A. AYDIN ALATAN.** Edge-aware stereo matching with O(1) complexity. *Proc. SPIE,* 09 February 2012, vol. 8290